# EUROPÄISCHE PATENTSCHRIFT

(11) **EP 4 392 768 B1**
(45) Veröffentlichungstag und Bekanntmachung des Hinweises auf die Patenterteilung: **03.12.2025**
(21) Anmeldenummer: 23802148.9
(22) Anmeldetag: 17.10.2023
(51) Int. Cl.: G01N 23/2204, G01N 23/223, C25D 21/14

(54) **VORRICHTUNG, AUSGEBILDET ZUR DURCHFÜHRUNG VON RÖNTGENFLUORESZENZANALYSE VON ZUMINDEST EINEM CHEMISCHEN FLUIDBAD, UND VERFAHREN UNTER VERWENDUNG DER VORRICHTUNG**
DEVICE, DESIGNED FOR CARRYING OUT X-RAY FLUORESCENCE ANALYSIS OF AT LEAST ONE CHEMICAL FLUID BATH, AND METHOD USING THE DEVICE
DISPOSITIF CONÇU POUR EFFECTUER UNE ANALYSE PAR FLUORESCENCE À RAYONS X D'AU MOINS UN BAIN DE FLUIDE CHIMIQUE, ET PROCÉDÉ UTILISANT LE DISPOSITIF

(30) Priorität: 18.10.2022 DE 102022127195
(43) Veröffentlichungstag der Anmeldung: 03.07.2024
(73) Patentinhaber: X-RAY SENSOR GMBH, 76137 Karlsruhe (DE)
(72) Erfinder: HALLER, Michael, Middletown, Connecticut 06457 (US); NENSEL, Bernhard, 76137 Karlsruhe (DE)
(74) Vertreter: Mehl-Mikus, Claudia
(86) Internationale Anmeldenummer: PCT/EP2023/078770
(87) Internationale Veröffentlichungsnummer: WO 2024/083789

(56) Entgegenhaltungen:
- CN-A- 111 487 271
- JP-A- 2003 004 673
- JP-A- 2004 205 412
- JP-A- 2011 127 954

## Beschreibung

Die Erfindung betrifft eine Vorrichtung, die zur Durchführung von Röntgenfluoreszenzanalyse von zumindest einem chemischen Fluidbad ausgebildet ist, und ein Verfahren zur Verwendung der genannten Vorrichtung.

Aus dem Stand der Technik ist es bekannt, den Metallgehalt in galvanischen Bädern, wie z. B. Zink-Nickel-Bädern, mit Hilfe eines Röntgenfluoreszenzgeräts zu untersuchen. Dazu werden dem jeweilig zu untersuchenden Bad manuell Proben entnommen und die Proben mit dem Röntgenfluoreszenzgerät analysiert. Derartige galvanische Bäder müssen kontinuierlich überwacht werden, um den Gehalt an Metallionen zu kontrollieren und gegebenenfalls zu steuern, weshalb in regelmäßigen zeitlichen Abständen jedem Bad Proben entnommen werden müssen. Die manuelle Entnahme und Analyse der Proben sind jedoch zeitaufwändig und dadurch kostenintensiv.

JP 2004 205412 A beschreibt eine Vorrichtung zur XRF-Analyse einer Plattierlösung, wobei die Probe in einem Schlauch zirkuliert, der ein Strahlungsfenster aufweist.

Ausgehend von diesem Stand der Technik ist es Aufgabe der vorliegenden Erfindung, eine verbesserte Vorrichtung zur einfachen und schnellen Analyse von chemischen Fluidbädern bereitzustellen.

Diese Aufgabe wird durch eine Vorrichtung mit den Merkmalen des Anspruchs 1 gelöst. Die weitere Aufgabe, eine einfache und schnelle Analyse von chemischen Fluidbädern durchzuführen, wird durch das Verfahren mit den Merkmalen des unabhängigen Anspruchs 13 gelöst.

Weiterbildungen der Vorrichtung und des Verfahrens sind in den Unteransprüchen ausgeführt.

Nach einer ersten Ausführungsform einer Vorrichtung, die zur Durchführung von Online-Röntgenfluoreszenzanalysen zumindest eines chemischen Fluids eines chemischen Fluidbads ausgebildet ist, weist diese Vorrichtung ein Gehäuse, einen Probenhalter und ein Röntgenfluoreszenzspektrometer auf. Das Röntgenfluoreszenzspektrometer stellt einen Strahlengang aus einem Eingangsstrahl in den Probenhalter und einen Ausgangsstrahl emittierter Röntgenstrahlung aus dem Probenhalter bereit. Dabei spannen der Ein- und der Ausgangsstrahl eine Strahlengangebene auf. Erfindungsgemäß ist der Probenhalter eine Schlauchhalterung, die mehrere Kanäle für jeweils einen Schlauch pro Kanal aufweist, der mit dem chemischen Fluidbad fluidisch verbunden ist. D. h., dass ein mit dem chemischen Fluidbad verbundener Schlauch einem Kanal der Anzahl von Kanälen zugeordnet ist. Diese Anzahl an Kanälen sind in der Schlauchhalterung in einer Schlauchebene E benachbart zueinander angeordnet, die orthogonal zu der Strahlengangebene S ist. Die Schlauchhalterung hat an jedem der Kanäle ein Strahlengangfenster, das für die Analyse in Bezug auf die Strahlengangebene S so angeordnet wird, dass der Ein- und der Ausgangsstrahl das Strahlengangfenster kreuzt.

Das Röntgenfluoreszenzspektrometer sendet einen primären Röntgenstrahl in den Probenhalter aus und regt dort Atome des zu verprobenden Fluids an. Die angeregten Atome emittieren materialcharakteristische Fluoreszenzstrahlung im Röntgenbereich auch in einem Austrittswinkel, der gleich dem Eintrittswinkel des primären Röntgenstrahls ist und so einem reflektierten Ausgangsstrahl entspricht.

"Online" heißt hierbei, dass die Röntgenfluoreszenzanalyse direkt in einer Bypassleitung des chemischen Fluidbad durchgeführt wird, die durch den Schlauch gebildet wird, der durch Anordnung in oder Verbindung mit dem Schlauchhalter zum Röntgenfluoreszenzspektrometer führt und direkt mit dem Fluidbad verknüpft ist. Es ist kein weiterer Arbeitsschritt notwendig, wie das manuelle Entnehmen und Analysieren von Proben aus dem Fluidbad, sondern vorteilhaft lässt sich ein chemisches Fluidbad mit der Röntgenfluoreszenzspektrometer einfach verbinden, sodass eine direkt verbundene Analyse ermöglicht wird. Das Fluid fließt durch den Schlauch zu dem Kanal mit dem Strahlengangfenster und kann dort, ohne die Bypassleitung zu verlassen, mit Hilfe der Röntgenstrahlung analysiert werden und wieder zu dem Bad zurückgeleitet werden. Manuelles Entnehmen einer Probe des zu analysierenden Bades und separat Messen der Probe entfällt. Die Analyse lässt sich somit vorteilhaft bedarfsgesteuert verwenden und auch mehrfach hintereinander, ohne den jeweiligen Prozess, der in dem betreffenden Fluidbad von Statten geht, zu unterbrechen.

Nach einer weiteren Ausführungsform der erfindungsgemäßen Vorrichtung ist die Schlauchhalterung in der Schlauchebene E orthogonal zu der Strahlengang-Ebene S in einer Richtung verfahrbar, die orthogonal zu den Kanälen verläuft. Dabei ist jedes der Strahlengangfenster mit der Schlauchhalterung in Bezug auf die Strahlengang-Ebene so anordenbar, dass der Ein- und der Ausgangsstrahl das jeweilige Strahlengangfenster kreuzt.

Das Strahlengangfenster kann nach einer noch weiteren Ausführungsform durch eine Öffnung in der Kanalwand ohne Füllung gebildet werden, wobei der Schlauch, der dem Kanal zugeordnet ist, im Kanal angeordnet ist bzw. sich durchgehend durch den Kanal erstreckt.

Nach einer hierzu alternativen Ausführungsform kann das Strahlengangfenster durch eine Öffnung gebildet sein, die durch eine Fensterfüllung abdichtend mit der Kanalwand verschlossen ist, wobei ein zuführender und rückführender Schlauchabschnitt jeweils mit dem Kanaleingang und dem Kanalausgang verbunden ist, sodass der Schlauch, der dem Kanal zugeordnet ist, quasi durch den Kanal unterbrochen ist. Im ersten Fall besteht der Schlauch und im zweiten Fall die Fensterfüllung aus einem Material, das einerseits für Röntgenstrahlung transparent und andererseits röntgenstabil ist.

Geeignete verwendbare Schläuche sind flexible rohrförmige Halbzeuge aus Elastomeren oder Thermoplasten und bevorzugt dünnwandige Chemieschläuche.

Der Schlauch ist geeigneter Weise ein Labor- und Vakuumschlauch. Dieser kann beispielsweise einen Durchmesser von 4 bis 10 mm innen, bevorzugt 5 bis 7 mm innen, besonders bevorzugt von 6,4 mm innen, und von 5 bis 12 mm außen, bevorzugt 7 bis 9 mm außen, besonders bevorzugt 7,9 mm außen, aufweisen. Durch eine Polymerwandung mit beispielsweise 0,75 mm Dicke kann Röntgenstrahlung in geeigneter Stärke transmittieren, sodass sich ein solcher Schlauch zur Anordnung in einer Schlauchhalterung ohne Fensterfüllung eignet. Die Angaben, die die Innen- und Außendurchmesser des Labor- und Vakuumschlauchs betreffen, sind nicht beschränkend, sondern lediglich beispielhaft zu verstehen.

Nach einer noch weiteren Ausführungsform der erfindungsgemäßen Vorrichtung ist jeder Anzahl von Kanälen jeweils ein Schlauch zugeordnet, wobei ein erster Schlauch mit einem ersten chemischen Fluidbad und jeder der weiteren Schläuche mit einem weiteren chemischen Fluidbad fluidisch verbunden sind. Bei zwei Kanälen, die mit jeweils einem Schlauch verbunden sind oder in denen jeweils ein Schlauch vorliegt, kann die Vorrichtung also mit zwei Fluidbädern verbunden werden und durch die Verfahrbarkeit der Schlauchhalterung kann jeder Kanal, der einem Schlauch zugeordnet ist, mit dem Strahlengangfenster in die Strahlengangebene verfahren werden und das durch den jeweiligen Schlauch zugeführte Fluid mit Hilfe des Röntgenfluoreszenzspektrometers vorteilhaft und geschickt ohne manuelles Eingreifen analysiert werden.

Nach einer noch weiteren Ausführungsform der erfindungsgemäßen Vorrichtung ist die Schlauchhalterung über eine Kopplungsvorrichtung mit einem Antriebsmotor operativ gekoppelt. Das Verfahren der Schlauchhalterung erfolgt dadurch vorteilhaft geführt motorisch und exakt. Die Kopplungsvorrichtung weist dazu zumindest ein Hebelelement und ein Übertragungsgestänge auf, wobei das Hebelelement den Antriebsmotor und das Übertragungsgestänge verbindet, das mit der Schlauchhalterung verbunden ist.

Nach noch einer weiteren Ausführungsform der erfindungsgemäßen Vorrichtung weist das länglich ausgebildete Hebelelement an einem ersten Ende eine dreiecksförmige Klemmausnehmung auf, deren eine Ecke in einen Schlitz mündet, der sich zu dem ersten Ende öffnet. Von einer langen, schmalen Seitenfläche erstreckt sich eine Gewindebohrung in einem rechten Winkel durch den Schlitz hindurch. Das längliche Hebelelement hat benachbart zu seinem zweiten Ende eine Durchtrittsbohrung. Von dem Antriebsmotor erstreckt sich eine Welle weg und ist in der dreiecksförmigen Ausnehmung festgelegt. In der Gewindebohrung ist ein Gewindestift angeordnet und spannt die Welle in der dreiecksförmigen Ausnehmung ein.

Zur Verbesserung der drehfesten Verbindung mit dem Hebelelement kann die Welle ein Drei- oder Sechskantprofil bzw. einen Endabschnitt mit Kantprofil zum Formschluss mit der dreiecksförmigen Ausnehmung aufweisen.

Am anderen Ende des Hebelelements ist in der Durchtrittsbohrung ein Stift drehbar angeordnet, der das Hebelelement mit dem Übertragungsgestänge koppelt. Dabei handelt es sich um ein L-förmiges Gestänge aus zwei Schenkeln, die schwenkbar miteinander verbunden sind, wobei das Hebelelement am freien Ende eines kurzen Schenkels schwenkbar angekoppelt ist. Ein langer Schenkel des L-förmigen Gestänges ist an einer von den Strahlengangfenstern abgewandten Seite der Schlauchhalterung befestigt und erstreckt sich parallel zu den Kanälen. Das Hebelelement dient mit dem Übertragungsgestänge der Bewegungsübertragung der Rotation der Motorwelle in eine Translationsbewegung der Schlauchhalterung in eine Richtung, die im rechten Winkel zu den Kanälen bzw. zu dem langen Schenkel des Übertragungsgestänges verläuft, der in einer Ebene parallel zur Schlauchebene E des Schlauchhalters liegt. Die Bewegungsübertragungsbauteile können so kompakt und platzsparend angeordnet werden.

Nach einer weiteren Ausführungsform der erfindungsgemäßen Vorrichtung weist jeder Kanal gegenüber des Strahlengangfensters in einem Auftreffbereich des Eingangsstrahls, d. h. in Richtung des Eingangsstrahls eine Röntgenstrahlensenke auf. Dazu kann von dem Kanal auf einer von dem Strahlengangfenster abgewandten Seite eine Sackbohrung unter einem Winkel entsprechend der Neigung des Eingangsstrahls abzweigen, um eine Röntgenstrahlensenke bereitzustellen, mit der Röntgenstrahlung des Eingangsstrahls, die den Kanal durchdringt, aufgefangen bzw. absorbiert wird. Zur Abschirmung nach außen kann die Schlauchhalterung aus einem Stahl, bevorzugt einem nickelfreien Edelstahl (403 Stahl), bestehen. Eine weitere Gehäuseummantelung oder ein Gehäusedeckel kann auch vorgesehen sein, die die Schlauchhalterung überdeckt, und aus diesem Material besteht.

Nach einer noch weiteren Ausführungsform der erfindungsgemäßen Vorrichtung ist die Schlauchhalterung mit zumindest einem Schwenkgestänge, das an dem Gehäuse befestigt ist, in der Schlauchebene E in einer zu den Kanälen orthogonalen Richtung schwenkbar verbunden. Die Bewegung der Schlauchhalterung, die mit Hilfe des Hebelelements von dem Motor durch das Übertragungsgestänge übertragen wird, das einseitig an einem Ende der Schlauchhalterung angreift, wird durch das Schwenkgestänge, das zu beiden Seiten der Schlauchhalterung angelenkt ist, in der Bewegungsebene stabilisiert. Je nachdem in welcher Richtung die Motorwelle dreht und die Schlauchhalterung in eine zu den Kanälen orthogonale Richtung verfährt, wird die bewegte Schlauchhalterung durch das an dem Gehäuse befestigte Schwenkgestänge, das der Bewegung der Schlauchhalterung folgt, in der Schlauchebenen E gehalten, wodurch die Strahlengangfenster der nebeneinander liegenden Kanäle gezielt in die Strahlengangebene S verfahren werden können.

Alternativ oder zusätzlich kann zur verbesserten Führung der Schlauchhalterung nach einer weiteren Ausführungsform der erfindungsgemäßen Vorrichtung vorgesehen sein, dass die Schlauchhalterung mit zumindest einem Führungselement geführt wird, das an dem Gehäuse befestigt ist und in die Richtung orthogonal zu den Kanälen der Schlauchhalterung verläuft. Das Führungselement kann auf unterschiedliche Weise geformt sein und es kann nach einer Ausführungsform eine Führungsschiene oder ein Zahnrad-Riemenantrieb sein. Neben einem Zahnrad-Riemenantrieb sind auch andere Mechaniken möglich, die ein leichtes Verfahren der Schlauchhalterung ermöglichen. Besonders bevorzugt können ein oder mehrere Polytetrafluorethylen beschichtete Streifen als Führungselemente verwendet werden. Sie erlauben, dass die Schlauchhalterung entlang des Gehäuses sehr abriebarm verfahren werden kann.

Um ferner dafür zu sorgen, dass zwischen der Schlauchhalterung und dem Gehäuse im Bereich des sich im Strahlengang befindlichen Strahlengangfensters kein Spalt entsteht, kann eine erfindungsgemäße Vorrichtung nach einer weiteren Ausführungsform auf einer von dem Strahlengangfenster abgewandten Seite der Schlauchhalterung eine Gegenlagervorrichtung mit einer rollbar gelagerten Kugel aufweisen, die die Schlauchhalterung orthogonal zu der Schlauchebene E im Bereich der Strahlengangebene S in Richtung des Gehäuses drückt.

In dem Gehäuse ist nach einer weiteren Ausführungsform der erfindungsgemäßen Vorrichtung eine Steuerungsvorrichtung angeordnet, die mit dem Antriebsmotor und dem Röntgenfluoreszenzspektrometer elektronisch gekoppelt ist, um eine automatische Steuerung bei einfacher Bedienung zu ermöglichen. Ferner können eine Speicherung der gemessenen Daten, sowie eine Auswertung (Analyse) und die Anzeige der Daten erfolgen. Hierzu kann die Vorrichtung im Gehäuse eine entsprechende Speicher-, Auswerte- und Anzeigeeinheit oder die Steuereinheit eine geeignete Schnittstelle aufweisen. Mit dieser kann die Steuereinheit mit einer externen Datenverarbeitungseinheit kabelgebunden oder kabellos verbunden werden.

Nach einer weiteren Ausführungsform der erfindungsgemäßen Vorrichtung ist der zumindest eine Schlauch, der mit dem chemischen Fluidbad fluidisch verbunden ist, mit einer Pumpe gekoppelt. Die Pumpe dient der gezielten Zuführung des Fluids in dem Schlauch zu der Schlauchhalterung und auch dazu, dass das bereits analysierte Fluid wieder in das jeweilige Bad zurückgeführt wird. Es kann eine einzige Pumpe oder es können mehrere Pumpen vorgesehen sein, für jeden Schlauch eine.

Nach einer noch weiteren Ausführungsform der erfindungsgemäßen Vorrichtung ist das chemische Fluidbad bevorzugt ein galvanisches Bad. In galvanischen Bädern befindet sich ein vorbestimmter Gehalt an unterschiedlichen Metallionen, der kontinuierlich kontrolliert werden muss, damit die konkrete Zusammensetzung des Bades konstant bleibt bzw. je nach Anwendung angepasst werden kann.

Die Erfindung betrifft ferner ein Verfahren zur Online-Röntgenfluoreszenzanalyse eines chemischen Fluids aus zumindest einem chemischen Fluidbad unter Verwendung der erfindungsgemäßen Vorrichtung. Das Verfahren umfasst dabei die folgenden Schritte:
a) Herstellen der fluidischen Verbindung des zumindest einen Schlauches, der einem der Kanäle des Schlauchhalters zugeordnet wird, mit dem chemischen Fluidbad, und damit Bereitstellen des chemischen Fluids durch den Schlauch in dem zugeordneten Kanal,
b) Einschalten des Röntgenfluoreszenzspektrometers und Erzeugen des Strahlenganges aus dem Eingangsstrahl erzeugter Röntgenstrahlung und dem Ausgangsstrahl aus emittierter Röntgenstrahlung, dabei Bestrahlen des chemischen Fluids,
c) Analysieren des chemischen Fluids durch Erfassung der emittierten Röntgenstrahlung. Das Verfahren kann in einer weiteren Ausführungsform den weiteren Schritt umfassen:
d) Wiederholen zumindest des Schrittes c) nach einer vorbestimmten Zeitdauer. Die Zeitdauer liegt bevorzugt in einem Bereich von wenigen Minuten bis mehrere Stunden. Das

Verfahren kann über die Steuerungseinheit automatisiert werden, so dass keine manuelle Entnahme oder auch manuelle Benutzung des Spektrometers mehr notwendig ist. Daher kann das Erzeugen des Strahlengangs in Schritt b) zur Analyse des chemischen Fluids durch Erfassung der emittierten Röntgenstrahlung in Schritt c) ebenfalls nach der vorbestimmten Zeitdauer erfolgen.

Schließlich betrifft die Erfindung ein Verfahren zur Online-Röntgenfluoreszenzanalyse eines ersten chemischen Fluids aus einem ersten chemischen Fluidbad und zumindest eines weiteren chemischen Fluids aus einem weiteren chemischen Fluidbad unter Verwendung der erfindungsgemäßen Vorrichtung, das die folgenden Schritte umfasst:
aa) Herstellen der fluidischen Verbindung eines ersten der Mehrzahl der Schläuche, der einem ersten der Kanäle des Schlauchhalters zugeordnet ist, der mit dem ersten chemischen Fluidbad fluidisch verbunden ist, und damit Bereitstellen des ersten chemischen Fluids durch den ersten Schlauch in dem ersten Kanal und Positionieren des Strahlengangfensters des ersten Kanals mit der Schlauchhalterung in dem Strahlengang,
bb) Einschalten des Röntgenfluoreszenzspektrometers und Erzeugen des Strahlenganges aus dem Eingangsstrahl erzeugter Röntgenstrahlung und dem Ausgangsstrahl aus emittierter Röntgenstrahlung, dabei Bestrahlen des ersten chemischen Fluids,
cc) Analysieren des ersten chemischen Fluids durch Erfassung der emittierten Röntgenstrahlung,
dd) Herstellen der fluidischen Verbindung eines weiteren der Mehrzahl der Schläuche, der einem weiteren der Kanäle des Schlauchhalters zugeordnet ist, mit einem der weiteren chemischen Fluidbäder, und damit Bereitstellen des weiteren chemischen Fluids in dem weiteren Kanal,
ee) nach Analyse des ersten chemischen Fluids, Verfahren der Schlauchhalterung in der Schlauchebene E und Positionieren des Strahlengangfensters des weiteren Kanals in dem Strahlengang,
ff) Analysieren des zweiten chemischen Fluids durch Erfassung der emittierten Röntgenstrahlung.

Technisch mögliche Änderungen der Reihenfolge einiger Teilschritte sollen hierbei umfasst sein, so kann z. B. der Schritt dd) der Herstellung der fluidischen Verbindung eines weiteren Schlauchs mit einem weiteren chemischen Fluidbad direkt nach Schritt aa) der Herstellung der fluidischen Verbindung des ersten Schlauchs mit dem ersten chemischen Fluidbad erfolgen, sodass zuerst sämtliche Fluidbäder über die jeweiligen Schläuche einem der Kanäle der Schlauchhalterung zugeordnet werden, bevor das jeweilige Fluid durch den Schlauch in dem zugeordneten Kanal bereitgestellt wird. Ferner soll umfasst sein, dass das Erzeugen des Strahlengangs in Schritt bb) nach der Analyse des ersten chemischen Fluids in Schritt cc) beim Verfahren der Schlauchhalterung in Schritt ee) unterbrochen und erst mit dem Positionieren des Strahlengangfensters des weiteren Kanals in dem Strahlengang fortgesetzt wird, um die Analyse des zweiten chemischen Fluids in Schritt ff) zu ermöglichen.

Ferner umfasst das erfindungsgemäße Verfahren in einer weiteren Ausführungsform den weiteren Schritt:
gg) Wiederholen der Schritte aa) bis ff) oder der Schritte dd) bis ff) und dabei einfach oder mehrfach Analysieren der chemischen Fluide in allen den Kanälen zugeordneten Schläuchen.

Weiterhin kann in noch einer weiteren Ausführungsform das erfindungsgemäße Verfahren den Schritt umfassen: d) Wiederholen der Schritte cc) und ff) nach einer vorbestimmten Zeitdauer. So kann die Schlauchhalterung nach jeder Analyse verfahren werden, damit bei jeder Analyse das Strahlengangfenster eines anderen Kanals im Strahlengang positioniert wird, um wechselweise die Fluide aus jedem Fluidbad, das über einen Schlauch einem der Kanäle zugeordnet ist, zu analysieren. Alternativ, falls für unterschiedliche Fluidbäder unterschiedliche Analyseintervalle vorgesehen sind, können mehrere Analysen eines Fluids nacheinander erfolgen, wobei die Schlauchhalterung die Position beibehält, bevor die Schlauchhalterung verfahren wird, um zur Analyse eines anderen Fluids das Strahlengangfenster eines anderen Kanals in den Strahlengang zu verfahren.

Weitere Ausführungsformen der Vorrichtung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Ansicht von oben in ein Gehäuse der erfindungsgemäßen Vorrichtung,
- **Fig. 2**: eine Schnittansicht durch einen Teil der erfindungsgemäßen Vorrichtung,
- **Fig. 3**: eine perspektivische Ansicht auf die Schlauchhalterung auf eine dem Gehäuse zugewandten Seite,
- **Fig. 4**: ein schematisches Diagramm des Aufbaus der erfindungsgemäßen Vorrichtung,
- **Fig. 5**: eine perspektivische Ansicht auf die Schlauchhalterung auf eine dem Gehäuse abgewandten Seite,
- **Fig. 6**: eine Schnittansicht durch einen Kanal nach Fig. 5, Schnitt A-A,
- **Fig. 7**: eine perspektivische Ansicht des Hebelelements,
- **Fig. 8**: eine schematische Ansicht der erfindungsgemäßen Vorrichtung mit der Schlauchhalterung in einer ersten Position,
- **Fig. 9**: eine schematische Ansicht der erfindungsgemäßen Vorrichtung mit der Schlauchhalterung in einer weiteren Position,
- **Fig. 10**: eine schematische Ansicht der erfindungsgemäßen Vorrichtung mit der Schlauchhalterung in noch einer weiteren Position,
- **Fig. 11**: eine Ansicht einer weiteren Ausführungsform der erfindungsgemäßen Vorrichtung von oben.

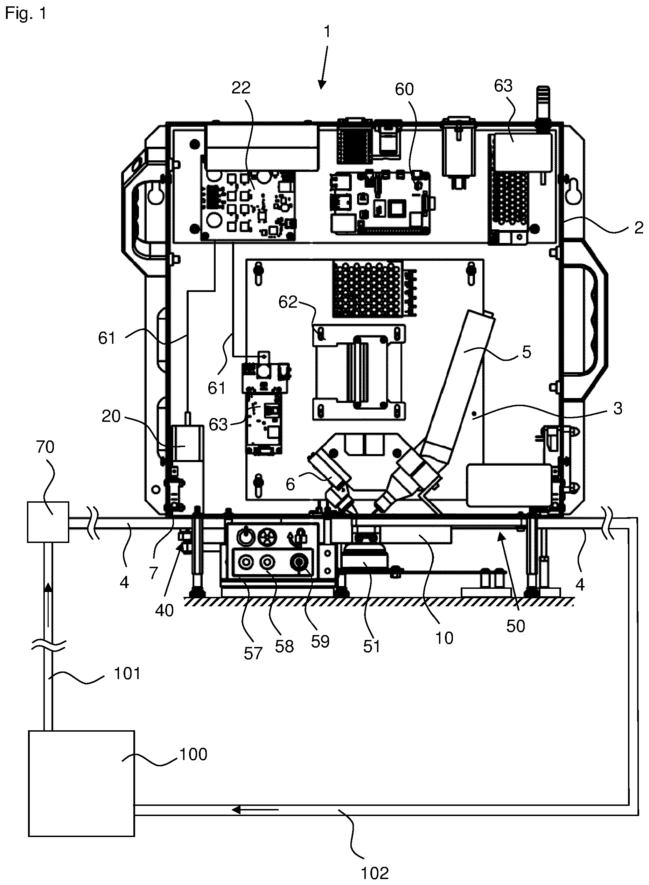

Eine Vorrichtung 1, die zur Durchführung einer oder mehrerer Röntgenfluoreszenzanalyse(n) von einem chemischen Fluidbad 100 online ausgebildet ist, weist ein Gehäuse 2 auf, wie in **Fig. 1****,** **2** **und** **4** gezeigt ist. In dem Gehäuse 2 ist ein Röntgenfluoreszenzspektrometer 3 sowie ein Motor 20 und eine Steuerungsvorrichtung 60 der Vorrichtung 1 angeordnet. An einer dem Röntgenfluoreszenzspektrometer 3 zugewandten Seite des Gehäuses 2 ist außerhalb dessen eine Probenhalterung in Form einer Schlauchhalterung 10 angeordnet, in der ein Schlauch 4 eingesetzt ist. Die Schlauchhalterung 10 befindet sich hier unterhalb des Gehäuses 2, das daher auf eine Oberfläche (angedeutet in **Fig. 1**) aufgeständert ist. Das Röntgenfluoreszenzspektrometer 3 weist eine eigene Steuereinheit 62 auf, die wie auch der Motor 20 über elektrische Leitungen 61 mit einer dem Motor 20 zugeordneten Steuerungsvorrichtung 22 der Vorrichtung 1 verbunden ist. Die in dem Röntgenfluoreszenzspektrometer 3 dargestellte Platine 63 ist eine Detektor-Adapterplatine, die mit der Steuerungsvorrichtung 60 operativ gekoppelt ist. Über eine Stromanschlussvorrichtung 63, die in dem Gehäuse 2 angeordnet ist, kann die Vorrichtung 1 mit einer externen Stromquelle (figurativ nicht dargestellt) verbunden werden. Die Stromanschlussvorrichtung 63 ist mit den elektronischen Komponenten der Vorrichtung 1 elektrisch verbunden (figurativ nicht dargestellt). An der Vorderseite des Gehäuses 2 ist ferner ein Kontrollpanel 57 angeordnet, das eine Ein/Aus-Beleuchtung 58 und einen Schlüsselschalter 59 aufweist, damit die Vorrichtung 1 gesichert an- und ausgeschaltet werden kann. Der Schlauch 4 ist fluidisch mit einem chemischen Fluidbad 100 verbunden, wobei ein Fluidkreislauf gebildet wird, der durch eine Pumpe 70 in eine Vorzugsrichtung gelenkt wird, wie durch Richtungspfeile verdeutlicht ist. Die fluidische Verbindung wird durch Fluidleitungen 101, 102, die mit dem Schlauch 4 identisch sein können oder mit diesem, wie in **Fig. 1** gezeigt, direkt verbunden sind.

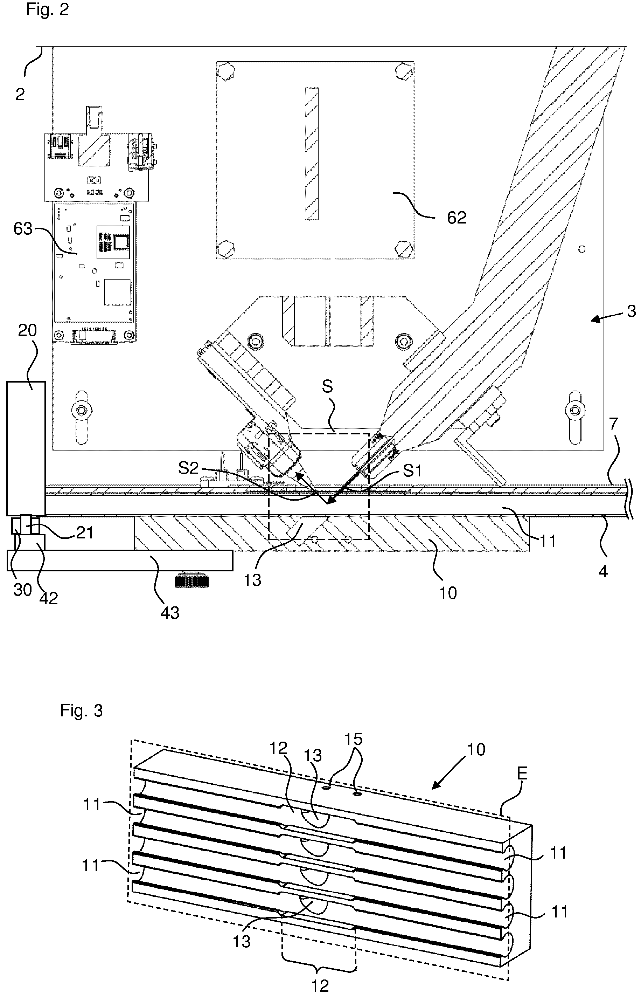

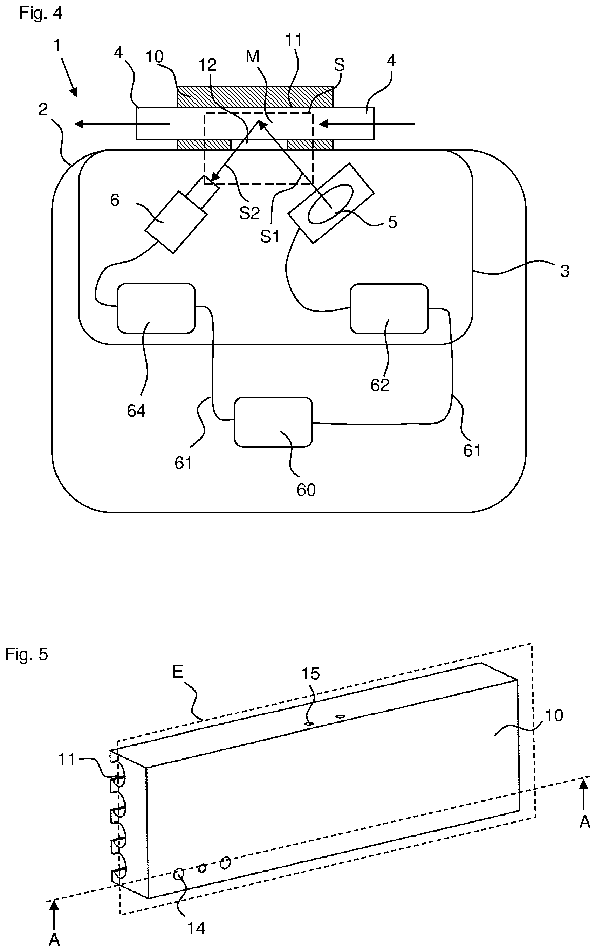

Das Röntgenfluoreszenzspektrometer 3 weist eine Röntgenstrahlquelle 5 und einen Detektor 6 auf, die in einem 90° Winkel zueinander angeordnet sind, wie in **Fig. 2** **und** **4** gezeigt ist. Die Röntgenstrahlquelle 5 wird von der Steuereinheit 62 gesteuert. Die Röntgenstrahlquelle 5 erzeugt einen zu der Schlauchhalterung 10 gerichteten Eingangsstrahlung S1 aus Röntgenstrahlung, die das Strahlengangfenster 12 und die Schlauchwand durchdringt, innerhalb des Schlauchs 4 das Fluid anregt und Fluoreszenzstrahlung erzeugt die als Ausgangsstrahl S2 durch das Strahlengangfenster 12 in den Detektor 6 gelenkt wird, der mittels eines digitalen Pulsprozessors 64 (DPP) das analog elektrische Signal in ein digitales Signal wandelt, dass dann der weiteren Datenverarbeitung als Spektrum zur Verfügung gestellt wird. Eingangsstrahl S1 und Ausgangsstrahl S2 spannen eine Strahlengangebene S auf, die zu der Gehäusewandung 7, die der Schlauchhalterung 10 zugewandt ist, in einem rechten Winkel steht. Dort, wo der Eingangsstrahl S1 mit dem Fluid in dem Schlauch 4 wechselwirkt und zu dem Ausgangsstrahl S2 wird, liegt ein Bereich in dem Schlauch 4 vor, der als Messzelle M interpretiert werden kann und dessen Abmessungen dem Durchmesser des Schlauches 4 mit der Ausdehnung des Röntgenstrahls entsprechen.

Die Schlauchhalterung 10 weist gemäß **Fig. 3****,** **5** **und** **6** vier Kanäle 11 auf, in denen insgesamt vier Schläuche eingelegt werden können. Die Kanäle 11 liegen nebeneinander in einer Schlauchebene E, die orthogonal zu der Strahlengangebene S liegt, und haben einen Querschnitt, der teilkreisförmig ist, wobei die Schläuche, die eingelegt werden, durch den Querschnitt gehalten werden. Die Schlauchhalterung 10 weist in jedem Kanal 11 ein zu dem Röntgenfluoreszenzgerät 3 hin sich öffnendes Strahlengangfenster 12 auf. Dieses erstreckt sich parallel zu der Schlauchebene E, wie in **Fig. 4** zu sehen ist, und damit im rechten Winkel, wie **Fig. 2****,** **4** entnehmbar, zu der Strahlengangebene S. Auf der dem Strahlengangfenster 12 gegenüberliegenden Seite zweigt von dem Kanal 11 in einem Bereich, der in Richtung des Eingangsstrahlengang S1 liegt, eine Röntgenstrahlensenke 13 ab. Diese kann mit einem Abschirmmaterial befüllt sein. Die Schlauchhalterung 10 ist vor der Wandung 7 des Gehäuses 2 beweglich gelagert, so dass jedes Strahlengangfenster 12 jedes Kanals 11 in die Strahlengangebene S bzw. in eine Position verfahren werden kann, in der die Strahlengangebene S das Strahlengangfenster 12 schneidet, sodass der Strahlengang aus Ein- und Ausgangsstrahl S1, S2 in den und aus dem Schlauch 4 durch das Strahlengangfenster 12 verläuft. Damit kann jeder in der Schlauchhalterung 10 vorliegende Schlauch 4 in die Strahlengangebene S gelangen, um das darin enthaltene Fluid mit dem Röntgenfluoreszenzspektrometer 3 zu analysieren. Jeder Schlauch 4 kann mit einem anderen Fluidbad 100 verbunden sein, so dass unterschiedliche Bäder kontrolliert werden können.

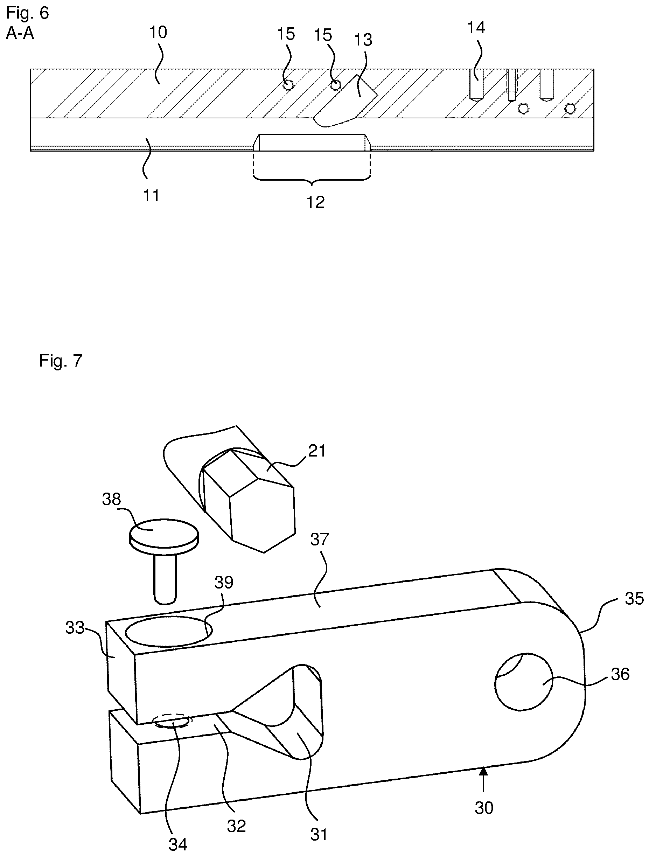

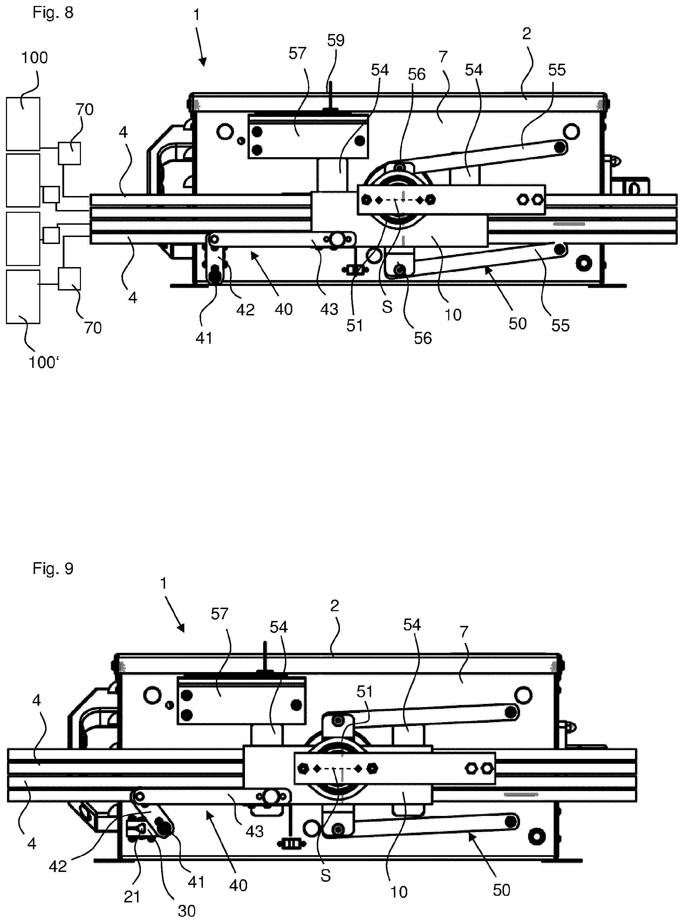

Die Schlauchhalterung 10 ist mit dem Gehäuse 2 über eine Kopplungsvorrichtung in der Schlauchebene E orthogonal zu den Kanälen verschiebbar verbunden. Die Kopplungsvorrichtung umfasst, wie **Fig. 1****,** **2** **und** **Fig. 8 bis 10** zeigen, ein Schwenkgestänge 50, ein L-förmiges Gestänge 40 sowie ein längliches Hebelelement 30, das das L-förmige Gestänge 40 mit dem Antriebsmotor 20 verbindet. Zur Befestigung der Kopplungsvorrichtung mit der Schlauchhalterung 10 sind in der Schlauchhalterung 10 an der von den Strahlengangfenstern 12 abgewandten Rückseite erste Befestigungsbohrungen 14 und an zwei Längsseitenflächen zweite Befestigungsbohrungen 15 vorgesehen (siehe **Fig. 3****,** **5****,** **6**), wobei das L-förmige Gestänge 40 an den ersten Befestigungsbohrungen 14 und das Schwenkgestänge 50 an den zweiten Befestigungsbohrungen 15 befestigt ist (vgl. **Fig. 8 bis 10**). Das Hebelelement 30 hat, wie in **Fig. 7** gezeigt ist, an seinem ersten Ende 33 eine dreiecksförmige Ausnehmung 31. Dessen eine Ecke 32 mündet in einen Schlitz 34, der sich bis zum dem ersten Ende 33 erstreckt und dort öffnet. Von einer langen Seite 37 erstreckt sich eine Gewindebohrung 39 in einem rechten Winkel durch den Schlitz 34. Benachbart zu seinem zweiten Ende 35 ist in dem länglichen Hebelelement 30 eine Durchtrittsbohrung 36 vorgesehen. Von dem Antriebsmotor 20 erstreckt sich eine Welle 21 weg, die in der dreiecksförmigen Ausnehmung 31 angeordnet ist. Ein Gewindestift 38 kann in der Gewindebohrung 39 angeordnet werden und spannt die Welle 21 in der dreiecksförmigen Ausnehmung 31 ein. Zur drehfesten Anordnung der Welle 21 in der dreiecksförmigen Ausnehmung 31 weist der Endabschnitt der Welle 21 ein Sechskantprofil auf, das formschlüssig in der dreiecksförmigen Ausnehmung 31 Aufnahme findet. Alternativ kann die Welle 21 ein Drei- oder Mehrkantprofil aufweisen, bei dem drei Kanten mit der dreiecksförmigen Ausnehmung 31 korrespondieren.

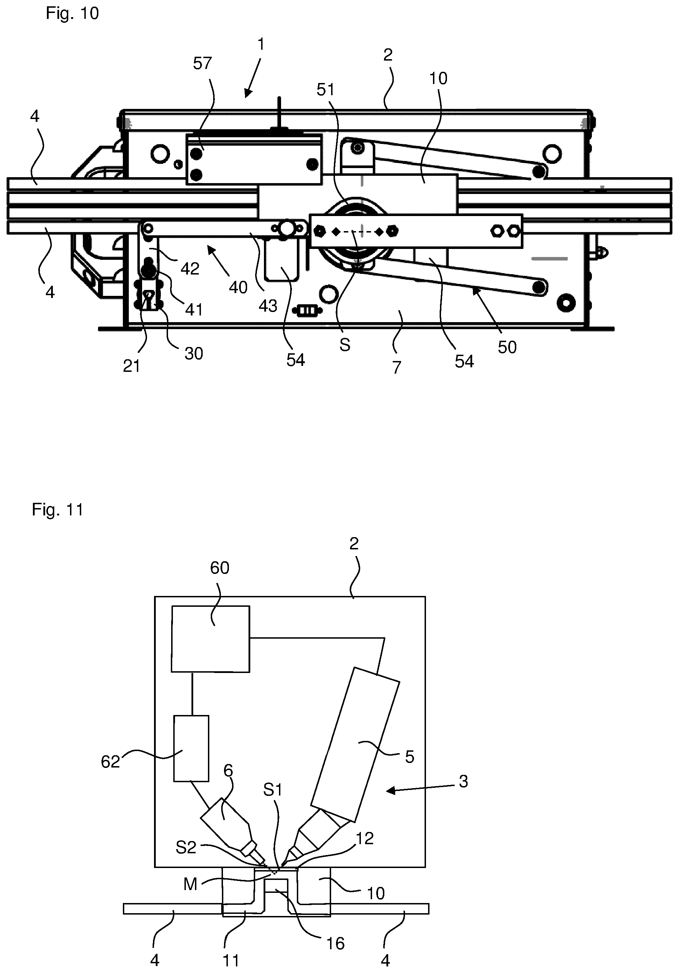

Wie **Fig. 9** **und** **10** zeigen, ist in der Durchtrittsbohrung 36 ein Stift 41 drehbar angeordnet, der das Hebelelement 30 mit dem L-förmigen Gestänge 40 verbindet. Das L-förmige Gestänge 40 weist einen kurzen Schenkel 42 und einen langen Schenkel 43 auf, die schwenkbar miteinander gekoppelt sind. Das Hebelelement 30 ist am freien Ende des kurzen Schenkels 42 angelenkt, der in der in **Fig. 8** gezeigten Anordnung das Hebelelement 30 verdeckt. Der lange Schenkel 43 des L-förmigen Gestänges 40 ist an einer von den Kanälen 11 abgewandten Seite der Schlauchhalterung 10 in den Befestigungsbohrungen 14 befestigt.

Das Schwenkgestänge 50 ist aus zwei parallel zueinander verlaufenden Schwenkstangen 55 gebildet. Ein erstes Ende jeder Stange 55 ist drehbar mit der Wandung 7 des Gehäuses 2 verbunden, und ein zweites Ende ist schwenkbar in eine Halterung 56 gelagert, die über die Befestigungsbohrungen 15 mit der Schlauchhalterung 10 verbunden ist. Sie bilden eine Bewegungsführung für die Hin- und Herbewegung der Schlauchhalterung 10 in der Schlauchebene E, die von dem langen Schenkel 43 des Übertragungsgestänges 40 an der Stelle der Befestigungsbohrungen 14 auf die Schlauchhalterung 10 übertragen wird. Ferner wird die Schlauchhalterung 10 in der Hin- und Herbewegung durch zwei parallele Polytetrafluorethylen beschichteter Streifen 54 unterstützt, die an dem Gehäuse 2 befestigt sind und in eine Richtung orthogonal zu den Kanälen 11 der Schlauchhalterung 10 verlaufen. Die Streifen 54 dienen als zusätzliche Führungselemente und erleichtern die Verfahrbewegung der Schlauchhalterung 10.

Um den Abstand der Schlauchhalterung 10 von dem Gehäuse 2 im Bereich der Strahlengangebene S zu minimieren, weist die Vorrichtung 1 eine Gegenlagervorrichtung 51 auf, die die Schlauchhalterung 10 mit dem in der Strahlengangebene S angeordneten Strahlengangfenster 12 orthogonal zu der Schlauchebene E in Richtung des Gehäuses 2 drückt. Die Gegenlagervorrichtung 51, die auf die Rückseite, d. h. der von dem Strahlengangfenster 12 abgewandten Seite der Schlauchhalterung 10 einwirkt, gestattet das Verfahren der Schlauchhalterung 10. Die Gegenlagervorrichtung kann eine in einer Lagerschale rollbar gelagerte Kugel (nicht figurativ dargestellt) sein, die z. B. aus Polytetrafluorethylen haltigem Material beschaffen sein kann.

In **Fig. 8 bis 10** ist der Bewegungsablauf dargestellt, der durch das Zusammenspiel zwischen Antriebsmotor 20 und der Kopplungsvorrichtung die Schlauchhalterung 10 in der Schlauchebene E parallel zu der Wandung 7 des Gehäuses 2 und orthogonal zum Verlauf der Kanäle bzw. Schläuche 4 verfährt. In **Fig. 8** ist ein in der Darstellung oberer Schlauch 4 mit einem ersten Fluidbad 100 über die Pumpe 70 und die weiteren Schläuche 4 mit weiteren Fluidbädern 100' über eine weitere Pumpe 70 fluidisch verbunden.

In **Fig. 8** weist das Hebelelement 30 in der Darstellung ausgehend von dem mit der Motorwelle 21 verbundenem ersten Ende 33 vertikal nach unten, sodass der an dem zweiten Ende 35 mittels Stift 41 angelenkte kurze Schenkel 42 des L-förmigen Gestänges 40 vertikal nach oben weist und so das Hebelelement 30 verdeckt. Mit dieser Lage des Hebelelements 30 steht der lange Schenkel 43, der parallel zu den Kanälen bzw. Schläuchen 4 an der Schlauchhalterung 10 festgelegt ist, im rechten Winkel zu dem kurzen Schenkel 42 und nimmt eine in der Darstellung untere Position ein. Das Schwenkgestänge 50 ist mit der Schlauchhalterung 10, die mit dem langen Schenkel 43 verbunden ist, nach "unten" verschwenkt. Entsprechend befindet sich die Schlauchhalterung 10 in einer "unteren Position", so dass der "oberste" Schlauch 4, der mit dem ersten Fluidbad 100 verbunden ist, in der Strahlengangebene S zu liegen kommt, wie an der Gegenlagervorrichtung 51 ersichtlich ist, deren Lage sich nach der Lage der Strahlengangebene S richtet.

Wird der Antriebsmotor 20 betätigt, dreht sich die Welle 21 gegen den Uhrzeigersinn und dreht das Hebelelement 30 in eine in der Darstellung horizontale, nach rechts weisende Position, **Fig. 9****.** Der kurze Schenkel 42 des L-förmigen Gestänges 40 weist in einem Winkel von etwa 45° nach schräg links oben und schiebt den langen Schenkel 43 und damit die Schlauchhalterung 10 nach "oben". Geführt wird diese Bewegung durch die Stangen 55 des Schwenkgestänges 50, sodass der lange Schenkel 43 mit dem kurzen Schenkel 42 einen Winkel von etwa 45° einschließt. Nun befindet sich der nächste Schlauch 4 (von oben aus gesehen der zweite Schlauch 4) in der Strahlengangebene S und das darin bereitgestellte Fluid kann mit dem Röntgenfluoreszenzspektrometer 3 bestrahlt und analysiert werden.

Ohne Abbildung ist eine Anordnung der Vorrichtung 1 mit der Schlauchhalterung 10 in einer Position, in der sich der nächste Schlauch 4 (von oben aus gesehen der dritte Schlauch 4) in der Strahlengangebene S befindet. Dazu dreht sich die Welle 21 ausgehend von **Fig. 9** weiter gegen den Uhrzeigersinn, bis das Hebelelement 30 schräg nach "rechts oben" weist und über den kurzen Schenkel 42 den langen Schenkel 43, der mit der Schlauchhalterung 10 durch das Schwenkgestänge 50 zwangsgeführt wird, weiter nach "oben" schiebt.

In **Fig. 10** wurde diese Bewegung weitergeführt. Die Welle 21 dreht weiter entgegen dem Uhrzeigersinn, bis das Hebelelement 30 senkrecht nach oben weist und so den kurzen Schenkel 42 des L-förmigen Gestänges 40 infolge der Führung der Schlauchhalterung 10 und des damit verbundenen langen Schenkels 43 durch das Schwenkgestänge 50 nach oben schiebt, sodass der kurze Schenkel 42 vertikal nach oben weisend ausgerichtet ist. Die Schlauchhalterung 10 befindet sich in einer "oberen Position", in der sich der unterste Schlauch 4 in der Strahlengangebene S befindet.

In **Fig. 11** ist eine weitere Möglichkeit gezeigt, die Schlauchhalterung 10 zu gestalten. Der gezeigte Kanal 11 ist umgekehrt U-förmig bzw. omega-förmig gebogen, so dass ein geschlossener Kanal 11 an ein mit einem röntgenstrahlentransparenten Material verfülltes Strahlengangfenster 12 zum das Röntgenfluoreszenzspektrometer 3 herangeführt und wieder weg geführt wird. Hinter der Messstelle M, in der der Strahlengang S1, S2 verläuft, ist eine Abschirmung 16 vorgesehen. Ferner ist in der gezeigten Ausführung der Schlauch 4, der mit einem hier nicht dargestellten Fluidbad fluidisch verbunden ist, an beiden Enden des Kanals 11 angeschlossen, ohne sich durch den Kanal 11 zu erstrecken.

### BEZUGSZEICHENLISTE

- 1: Vorrichtung
- 2: Gehäuse
- 3: Röntgenfluoreszenzspektrometer
- 4: Schlauch
- 5: Röntgenstrahlquelle
- 6: Detektor
- 7: Gehäusewandung
- 10: Schlauchhalterung
- 11: Kanal
- 12: Strahlengangfenster
- 13: Röntgenstrahlensenke
- 14: Befestigungsbohrung
- 15: Befestigungsbohrung
- 16: Abschirmung
- 20: Antriebsmotor
- 21: Welle
- 22: Steuereinheit Motor
- 30: Hebelelement
- 31: Dreiecksförmige Ausnehmung
- 32: Ecke
- 33: Erstes Ende
- 34: Schlitz
- 35: Zweites Ende
- 36: Durchtrittsbohrung
- 37: Lange Seite
- 38: Gewindestift
- 39: Gewindebohrung
- 40: Gestänge
- 41: Stift
- 42: Kurzer Schenkel
- 43: Langer Schenkel
- 50: Schwenkgestänge
- 51: Gegenlagervorrichtung
- 54: Streifen
- 55: Schwenkstange
- 56: Schwenkhalterung
- 57: Kontrollpanel
- 58: Ein/Aus-Beleuchtung
- 59: Schlüsselschalter
- 60: Steuerungsvorrichtung
- 61: Elektrische Leitung
- 62: Steuerungseinheit Röntgenfluoreszenzspektrometer
- 63: Detektor-Adapterplatine
- 70: Pumpe
- 100: Fluidbad
- 100': Fluidbad
- 101, 102: Fluidleitungen

- E: Schlauchebene
- M: Messzelle
- S: Strahlengangebene
- S1: Eingangsstrahl
- S2: Ausgangsstrahl

## Patentansprüche

1. Vorrichtung (1), ausgebildet zur Durchführung von Online-Röntgenfluoreszenzanalysen zumindest eines chemischen Fluids eines chemischen Fluidbads (100),
wobei die Vorrichtung ein Gehäuse (2), einen Probenhalter und ein Röntgenfluoreszenzspektrometer (3) aufweist, das einen Strahlengang aus einem Eingangsstrahl (S1) in den Probenhalter und einen Ausgangsstrahl (S2) emittierter Röntgenstrahlung aus dem Probenhalter bereitstellt, wobei der Ein- und der Ausgangsstrahl (S1, S2) eine Strahlengangebene (S) aufspannen, und
wobei der Probenhalter eine Schlauchhalterung (10) ist, die eine Mehrzahl von Kanälen (11) für jeweils einen Schlauch (4), der mit dem chemischen Fluidbad (100) fluidisch verbunden ist, aufweist, wobei die Mehrzahl von Kanälen (11) in einer Schlauchebene (E) benachbart zueinander angeordnet ist, die orthogonal zu der Strahlengangebene (S) ist, und wobei die Schlauchhalterung (10) an jedem der Kanäle (11) ein Strahlengangfenster (12) aufweist, das in Bezug auf die Strahlengangebene (S) so anordenbar ist, dass der Ein- und der Ausgangsstrahl (S1, S2) das Strahlengangfenster (12) kreuzt.

2. Vorrichtung (1) nach Anspruch 1,
**dadurch gekennzeichnet, dass**
die Schlauchhalterung (10) in der Schlauchebene (E) orthogonal zu der Strahlengang-Ebene (S) in eine Richtung verfahrbar ist, die orthogonal zu den Kanälen (11) verläuft, wobei jedes der Strahlengangfenster (12) mit der Schlauchhalterung (10) in Bezug auf die Strahlengang-Ebene (S) so anordenbar ist, dass der Ein- und der Ausgangsstrahl das jeweilige Strahlengangfenster (12) kreuzt.

3. Vorrichtung (1) nach Anspruch 1 oder 2,
**dadurch gekennzeichnet, dass**
jedem Kanal (11) der Mehrzahl der Kanäle (11) jeweils ein Schlauch (4) zugeordnet ist, wobei ein erster Schlauch (4) mit einem ersten chemischen Fluidbad (100) und jeder der weiteren Schläuche (4) mit einem weiteren chemischen Fluidbad (100') fluidisch verbunden sind.

4. Vorrichtung (1) nach zumindest einem der Ansprüche 1 bis 3,
**dadurch gekennzeichnet, dass**
die Schlauchhalterung (10) über eine Kopplungsvorrichtung mit einem Antriebsmotor (20) operativ gekoppelt ist, wobei die Kopplungsvorrichtung zumindest ein Hebelelement (30) und ein Übertragungsgestänge (40) aufweist, wobei das Hebelelement (30) den Antriebsmotor (20) und das Übertragungsgestänge (40) verbindet, das mit der Schlauchhalterung (10) verbunden ist.

5. Vorrichtung (1) nach Anspruch 4,
**dadurch gekennzeichnet, dass**
- das Hebelelement (30) an einem ersten Ende (33) eine dreiecksförmige Klemmausnehmung (31) aufweist, deren eine Ecke (32) in einen Schlitz (34) mündet, der sich zu dem ersten Ende (33) öffnet, wobei sich von einer langen Seite (37) eine Gewindebohrung (39) in einem rechten Winkel durch den Schlitz (34) erstreckt, und wobei das Hebelelement (30) benachbart zu seinem zweiten Ende (35) eine Durchtrittsbohrung (36) aufweist, und
- sich von dem Antriebsmotor (20) eine Welle (21) weg erstreckt und in der dreiecksförmige Ausnehmung (31) festgelegt ist, wobei ein Gewindestift (38) in der Gewindebohrung (39) angeordnet ist und die Welle (21) in der dreiecksförmigen Ausnehmung (31) einspannt, und
- in der Durchtrittsbohrung (36) ein Stift (41) drehbar angeordnet ist, der das Hebelelement (30) mit dem Übertragungsgestänge (40), das ein L-förmiges Gestänge (40) aus zwei Schenkeln (42,43) ist, die schwenkbar miteinander verbunden sind, koppelt, und wobei das Hebelelement (30) an einem Ende eines kurzen Schenkels (42) und ein langer Schenkel (43) des L-förmigen Gestänges (40) an einer von den Strahlengangfenstern (12) abgewandten Seite der Schlauchhalterung (10) befestigt ist.

6. Vorrichtung (1) nach zumindest einem der Ansprüche 1 bis 5,
**dadurch gekennzeichnet, dass**
jeder Kanal (11) gegenüber des Strahlengangfensters (12) in einem Auftreffbereich des Eingangsstrahls (S1) eine Röntgenstrahlensenke (13) aufweist.

7. Vorrichtung (1) nach zumindest einem der Ansprüche 1 bis 6,
**dadurch gekennzeichnet, dass**
die Schlauchhalterung (10)
- mit zumindest einem Schwenkgestänge (50), das an dem Gehäuse (2) befestigt ist, in der Schlauchebene (E) schwenkbar verbunden ist,
und/oder
- mit zumindest einem Führungselement (54) verfahrbar gekoppelt ist, das an dem Gehäuse (2) befestigt ist und in eine Richtung orthogonal zu den Kanälen der Schlauchhalterung (10) verläuft.

8. Vorrichtung (1) nach Anspruch 7,
**dadurch gekennzeichnet, dass**
das Führungselement (54) eine Führungsschiene, ein Zahnrad-Riemenantrieb oder ein Polytetrafluorethylen beschichteter Streifen ist.

9. Vorrichtung (1) nach zumindest einem der Ansprüche 1 bis 8,
**dadurch gekennzeichnet, dass**
die Vorrichtung (1) auf einer von dem Strahlengangfenster (12) abgewandten Seite der Schlauchhalterung (10) eine Gegenlagervorrichtung (51) mit einer rollbar gelagerten Kugel aufweist, die die Schlauchhalterung (10) orthogonal zu der Schlauchebene (E) im Bereich der Strahlengangebene (S) in Richtung des Gehäuses (2) drückt.

10. Vorrichtung (1) nach zumindest einem der Ansprüche 4 bis 9,
**dadurch gekennzeichnet, dass**
in dem Gehäuse (2) eine Steuerungsvorrichtung (60) angeordnet ist, die mit dem Antriebsmotor (20) und dem Röntgenfluoreszenzspektrometer (3) elektronisch gekoppelt ist.

11. Vorrichtung (1) nach zumindest einem der Ansprüche 1 bis 10,
**dadurch gekennzeichnet, dass**
der Schlauch (4), der mit dem chemischen Fluidbad (100) fluidisch verbunden ist, mit einer Pumpe (70) gekoppelt ist.

12. Vorrichtung (1) zumindest einem der Ansprüche 1 bis 11,
**dadurch gekennzeichnet, dass**
das chemische Fluidbad (100) ein galvanisches Bad ist.

13. Verfahren zur Online- Röntgenfluoreszenzanalyse eines chemischen Fluids aus zumindest einem chemischen Fluidbad (100) unter Verwendung einer Vorrichtung (1) nach zumindest einem der Ansprüche 1 bis 12,
**umfassend die Schritte**
a) Herstellen der fluidischen Verbindung des Schlauches (4) zu einem der Kanäle (11) des Schlauchhalters (10) mit dem chemischen Fluidbad (100), und damit Bereitstellen des chemischen Fluids durch den Schlauch (4) in dem zugeordneten Kanal (11),
b) Einschalten des Röntgenfluoreszenzspektrometers (3) und Erzeugen des Strahlenganges aus dem Eingangsstrahl (S1) und dem Ausgangsstrahl (S2) aus emittierter Röntgenstrahlung, dabei Bestrahlen des chemischen Fluids,
c) Analysieren des chemischen Fluids durch Erfassung der emittierten Röntgenstrahlung.

14. Verfahren nach Anspruch 13,
**umfassend die Schritte**
d) Wiederholen zumindest des Schrittes c) nach einer vorbestimmten Zeitdauer.

15. Verfahren zur online Röntgenfluoreszenzanalyse eines ersten chemischen Fluids aus einem ersten chemischen Fluidbad (100) und zumindest eines weiteren chemischen Fluids aus einem weiteren chemischen Fluidbad (100') unter Verwendung einer Vorrichtung nach zumindest einem der Ansprüche 3 bis 12,
**umfassend die Schritte**
aa) Herstellen der fluidischen Verbindung eines ersten der Mehrzahl der Schläuche (4) zu einem ersten der Kanäle (11) des Schlauchhalters (10) mit dem ersten chemischen Fluidbad (100), und damit Bereitstellen des ersten chemischen Fluids durch den ersten Schlauch (4) in dem ersten Kanal (11),
und Positionieren des Strahlengangfensters (12) des ersten Kanals (11) mit der Schlauchhalterung (10) in dem Strahlengang,
bb) Einschalten des Röntgenfluoreszenzspektrometers (3) und Erzeugen des Strahlenganges aus dem Eingangsstrahl (S1) und dem Ausgangsstrahl (S2) aus emittierter Röntgenstrahlung, dabei Bestrahlen des ersten chemischen Fluids,
cc) Analysieren des ersten chemischen Fluids durch Erfassung der emittierten Röntgenstrahlung,
dd) nach Analyse des ersten chemischen Fluids Bereitstellen und Aktivieren der fluidischen Verbindung eines weiteren der Mehrzahl der Schläuche (4) der mit einem weiteren der chemischen Fluidbäder (100) fluidisch verbunden ist, und damit Bereitstellen eines zweiten chemischen Fluids in dem weiteren Schlauch (4),
ee) nach Analyse des ersten chemischen Fluids Verfahren der Schlauchhalterung (10) in der Schlauchebene (E) und Positionieren des Strahlengangfensters (12) des weiteren Kanals (11) in dem Strahlengang,
ff) Analysieren des weiteren chemischen Fluids durch Erfassung der emittierten Röntgenstrahlung.

16. Verfahren nach Anspruch 15,
**umfassend den Schritt**
gg) Wiederholen der Schritte aa) bis ff) oder der Schritte dd) bis ff) und dabei einfach oder mehrfach Analysieren der chemischen Fluide in allen Schläuchen (4) der Mehrzahl von Schläuchen (4).

17. Verfahren nach Anspruch 15 oder 16,
**umfassend die Schritte**
hh) Wiederholen der Schritte cc) und ff) nach einer vorbestimmten Zeitdauer.

## Claims

1. A device (1), designed for carrying out online x-ray fluorescence analyses of at least one chemical fluid of a chemical fluid bath (100),
wherein the device has a housing (2), a sample holder and an x-ray fluorescence spectrometer (3), which provides a beam path of an input beam (S1) into the sample holder and an output beam (S2) of emitted x-ray radiation from the sample holder, wherein the input and the output beam (S1, S2) span a beam path plane (S), and
wherein the sample holder is a tube mount (10), which has a plurality of channels (11), for one tube (4) each, which is fluidically connected to the chemical fluid bath (100), wherein the plurality of channels (11) is arranged adjacent to one another in a tube plane (E), which is orthogonal to the beam path plane (S), and wherein on each of the channels (11), the tube mount (10) has a beam path window (12), which can be arranged with respect to the beam path plane (S) in such a way that the input and the output beam (S1, S2) intersects with the beam path window (12).

2. The device (1) according to claim 1,
**characterized in that**
the tube mount (10) can be displaced in the tube plane (E) orthogonal to the beam path plane (S) in a direction, which runs orthogonal to the channels (11), wherein each of the beam path windows (12) can be arranged with the tube mount (10) with respect to the beam path plane (S) in such a way that the input and the output beam intersects with the respective beam path window (12).

3. The device (1) according to claim 1 or 2,
**characterized in that**
one tube (4) each is assigned to each channel (11) of the plurality of the channels (11), wherein a first tube (4) is fluidically connected to a first chemical fluid bath (100) and each of the further tubes (4) is fluidically connected to a further chemical fluid bath (100').

4. The device (1) according to at least any one of claims 1 to 3,
**characterized in that**
the tube mount (10) is operatively coupled to a drive motor (20) via a coupling device, wherein the coupling device has at least one lever element (30) and one transmission linkage (40), wherein the lever element (30) connects the drive motor (20) and the transmission linkage (40), which is connected to the tube mount (10).

5. The device (1) according to claim 4,
**characterized in that**
- the lever element (30) has, on a first end (33), a triangular clamping recess (31), the one corner (32) of which leads into a slit (34), which opens towards the first end (33), wherein a threaded bore (39) extends at a right angle from a long side (37) through the slit (34), and wherein adjacent to its second end (35), the lever element (30) has a passage bore (36), and
- a shaft (21) extends away from the drive motor (20) and is fixed in the triangular recess (31), wherein a threaded pin (38) is arranged in the threaded bore (39) and clamps the shaft (21) in the triangular recess (31), and
- a pin (41) is rotatably arranged in the passage bore (36), which pin couples the lever element (30) to the transmission linkage (40), which is an L-shaped linkage (40) consisting of two legs (42, 43), which are pivotably connected to one another, and wherein the lever element (30) is fastened to one end of a short leg (42) and a long leg (43) of the L-shaped linkage (40) is fastened to a side of the tube mount (10) facing away from the beam path windows (12).

6. The device (1) according to at least any one of claims 1 to 5,
**characterized in that**
each channel (11) has an x-ray beam sink (13) with respect to the beam path window (12) in a region of incidence of the input beam (S1).

7. The device (1) according to at least any one of claims 1 to 6,
**characterized in that**
the tube mount (10)
- is connected to at least one pivot linkage (50), which is fastened to the housing (2), so as to be pivotable in the tube plane (E),
and/or
- is displaceably coupled to at least one guide element (54), which is fastened to the housing (2) and runs in a direction orthogonal to the channels of the tube mount (10).

8. The device (1) according to claim 7,
**characterized in that**
the guide element (54) is a guide rail, a gear wheel belt drive or a polytetrafluoroethylene-coated strip.

9. The device (1) according to at least any one of claims 1 to 8,
**characterized in that**
the device (1) has, on a side of the tube mount (10) facing away from the beam path window (12), a counter bearing device (51) with a ball mounted so as to be capable of rolling, which pushes the tube mount (10) in the direction of the housing (2) orthogonal to the tube plane (E) in the region of the beam path plane (S).

10. The device (1) according to at least any one of claims 4 to 9,
**characterized in that**
a control device (60) is arranged in the housing (2), which control device is electronically coupled to the drive motor (20) and the x-ray fluorescence spectrometer (3).

11. The device (1) according to at least any one of claims 1 to 10,
**characterized in that**
the tube (4), which is fluidically connected to the chemical fluid bath (100), is coupled to a pump (70).

12. The device (1) according to at least any one of claims 1 to 11,
**characterized in that**
the chemical fluid bath (100) is a galvanic bath.

13. A method for the online x-ray fluorescence analysis of a chemical fluid from at least one chemical fluid bath (100) by using a device (1) according to at least any one of claims 1 to 12,
**comprising the steps of:**
a) establishing the fluidic connection of the tube (4) to one of the channels (11) of the tube mount (10) to the chemical fluid bath (100), and thus providing the chemical fluid through the tube (4) in the assigned channel (11),
b) turning on the x-ray fluorescence spectrometer (3) and generating the beam path of the input beam (S1) and the output beam (S2) of emitted x-ray radiation, thereby irradiating the chemical fluid,
c) analyzing the chemical fluid by detection of the emitted x-ray radiation.

14. The method according to claim 13,
**comprising the step of**
d) repeating at least step c) after a predetermined time period.

15. A method for the online x-ray fluorescence analysis of a first chemical fluid from a first chemical fluid bath (100) and of at least one further chemical fluid from a further chemical fluid bath (100') by using a device according to at least any one of claims 3 to 12,
**comprising the steps of**
aa) establishing the fluidic connection of a first one of the plurality of the tubes (4) to a first one of the channels (11) of the tube mount (10) to the first chemical fluid bath (100), and thus providing the first chemical fluid through the first tube (4) in the first channel (11),
and positioning the beam path window (12) of the first channel (11) with the tube mount (10) in the beam path,
bb) turning on the x-ray fluorescence spectrometer (3) and generating the beam path of the input beam (S1) and the output beam (S2) of emitted x-ray radiation, thereby irradiating the first chemical fluid,
cc) analyzing the first chemical fluid by detection of the emitted x-ray radiation, dd) providing and activating the fluidic connection of a further one of the plurality of the tubes (4), which is fluidically connected to a further one of the chemical fluid baths (100), and thus providing a second chemical fluid in the further tube (4), after analysis of the first chemical fluid,
ee) displacing the tube mount (10) in the tube plane (E) and positioning the beam path window (12) of the further channel (11) in the beam path after analysis of the first chemical fluid,
ff) analyzing the further chemical fluid by detection of the emitted x-ray radiation.

16. The method according to claim 15,
**comprising the step of**
gg) repeating steps aa) to ff) or of steps dd) to ff) and thereby analyzing the chemical fluids once or several times in all tubes (4) of the plurality of tubes (4).

17. The method according to claim 15 or 16,
**comprising the steps of**
hh) repeating steps cc) and ff) after a predetermined time period.

## Revendications

1. Dispositif (1) conçu pour effectuer des analyses par fluorescence X en ligne d'au moins un fluide chimique d'un bain de fluide chimique (100), le dispositif comportant un boîtier (2), un porte-échantillon et un spectromètre de fluorescence X (3) qui fournit un trajet de faisceau provenant d'un faisceau d'entrée (S1) dans le porte-échantillon et un faisceau de sortie (S2) de rayons X émis à partir du porte-échantillon, les faisceaux d'entrée et de sortie (S1, S2) définissant un plan de trajet de faisceau (S), et
le support d'échantillon étant un support de tuyau (10) qui comprend une pluralité de canaux (11) pour chacun des tuyaux (4) reliés de façon fluidique au bain de fluide chimique (100), la pluralité de canaux (11) étant disposée de manière adjacente les uns aux autres dans un plan de tuyau (E) qui est orthogonal au plan de trajet de faisceau (S), et le support de tuyau (10) comportant, sur chacun des canaux (11), une fenêtre de trajet de faisceau (12) qui peut être disposée par rapport au plan de trajet de faisceau (S) de telle sorte que les rayons d'entrée et de sortie (S1, S2) traversent la fenêtre de trajet de faisceau (12).

2. Dispositif (1) selon la revendication 1,
**caractérisé en ce que**
le support de tuyau (10) est mobile dans le plan du tuyau (E) orthogonalement au plan du trajet du faisceau (S) dans une direction orthogonale aux canaux (11), chacune des fenêtres de trajet du faisceau (12) pouvant être disposée avec le support de tuyau (10) par rapport au plan du trajet du faisceau (S) de telle sorte que le faisceau entrant et le faisceau sortant traversent la fenêtre de trajet du faisceau (12) respective.

3. Dispositif (1) selon la revendication 1 ou 2,
**caractérisé en ce que**
chaque canal (11) de la pluralité de canaux (11) est associé à un tuyau (4), un premier tuyau (4) étant relié de façon fluidique à un premier bain de fluide chimique (100) et chacun des autres tuyaux (4) étant relié de façon fluidique à un autre bain de fluide chimique (100').

4. Dispositif (1) selon au moins l'une des revendications 1 à 3,
**caractérisé en ce que**
le support de tuyau (10) est couplé de manière opérationnelle à un moteur d'entraînement (20) via un dispositif de couplage, le dispositif de couplage comportant au moins un élément de levier (30) et une tringlerie de transmission (40), l'élément de levier (30) reliant le moteur d'entraînement (20) et la tringlerie de transmission (40) qui est reliée au support de tuyau (10).

5. Dispositif (1) selon la revendication 4,
**caractérisé en ce que**
- l'élément de levier (30) présente, à une première extrémité (33), un évidement de serrage triangulaire (31) dont un coin (32) débouche dans une fente (34) qui s'ouvre vers la première extrémité (33), un trou taraudé (39) s'étendant à angle droit à travers la fente (34) à partir d'un côté long (37), et l'élément de levier (30) présentant, à proximité de sa deuxième extrémité (35), un alésage de passage (36), et
- un arbre (21) s'étend à partir du moteur d'entraînement (20) et est fixé dans l'évidement triangulaire (31), une tige filetée (38) étant disposée dans le trou taraudé (39) et serrant l'arbre (21) dans l'évidement triangulaire (31), et
- une tige (41) est disposée de façon rotative dans l'alésage de passage (36), laquelle relie l'élément de levier (30) à la tringlerie de transmission (40), qui est une tringlerie en forme de L (40) composée de deux branches (42, 43) reliées entre elles de façon pivotante, et l'élément de levier (30) étant fixé à une extrémité d'une branche courte (42) et une branche longue (43) de la tringlerie en forme de L (40) étant fixée à un côté du support de tuyau (10) opposé aux fenêtres de trajet du faisceau (12).

6. Dispositif (1) selon au moins l'une des revendications 1 à 5,
**caractérisé en ce que**
chaque canal (11) présente un puits à rayons X (13) en face de la fenêtre de trajet du faisceau (12), dans une zone d'impact du faisceau d'entrée (S1).

7. Dispositif (1) selon au moins l'une des revendications 1 à 6,
**caractérisé en ce que**
le support de tuyau (10)
- est relié de façon pivotante dans le plan du tuyau (E) à au moins une tringlerie pivotante (50) fixée au boîtier (2),
et/ou
- est couplé de manière mobile à au moins un élément de guidage (54) qui est fixé au boîtier (2) et s'étend dans une direction orthogonale aux canaux du support de tuyau (10).

8. Dispositif (1) selon la revendication 7,
**caractérisé en ce que**
l'élément de guidage (54) est un rail de guidage, un entraînement à courroie dentée ou une bande revêtue de polytétrafluoroéthylène.

9. Dispositif (1) selon au moins l'une des revendications 1 à 8,
**caractérisé en ce que**
le dispositif (1) comporte, sur un côté du support de tuyau (10) opposé à la fenêtre de trajet du faisceau (12) un dispositif de contre-palier (51) avec une bille montée en rouleau, qui presse le support de tuyau (10) orthogonalement au plan du tuyau (E) dans la zone du plan de trajet de faisceau (S) en direction du boîtier (2).

10. Dispositif (1) selon au moins l'une des revendications 4 à 9,
**caractérisé en ce qu'un**
dispositif de commande (60) est disposé dans le boîtier (2) et est couplé électroniquement au moteur d'entraînement (20) et au spectromètre de fluorescence X (3).

11. Dispositif (1) selon au moins l'une des revendications 1 à 10,
**caractérisé en ce que**
le tuyau (4), qui est relié de façon fluidique au bain de fluide chimique (100), est couplé à une pompe (70).

12. Dispositif (1) selon au moins l'une des revendications 1 à 11,
**caractérisé en ce que**
le bain de fluide chimique (100) est un bain galvanique.

13. Procédé d'analyse par fluorescence X en ligne d'un fluide chimique provenant d'au moins un bain de fluide chimique (100) à l'aide d'un dispositif (1) selon au moins l'une des revendications 1 à 12,
**comprenant les étapes suivantes** :
a) l'établissement de la connexion fluidique du tuyau (4) à l'un des canaux (11) du support de tuyau (10) avec le bain de fluide chimique (100), et donc la fourniture du fluide chimique à travers le tuyau (4) dans le canal associé (11),
b) la mise en marche du spectromètre de fluorescence X (3) et la génération du trajet du faisceau à partir du faisceau d'entrée (S1) et du faisceau de sortie (S2) de rayons X émis, irradiant ainsi le fluide chimique,
c) l'analyse du fluide chimique par détection des rayons X émis.

14. Procédé selon la revendication 13,
**comprenant les étapes suivantes :**
d) répéter au moins l'étape c) après une durée prédéterminée.

15. Procédé d'analyse par fluorescence X en ligne d'un premier fluide chimique provenant d'un premier bain de fluide chimique (100) et d'au moins un autre fluide chimique provenant d'un autre bain de fluide chimique (100') à l'aide d'un dispositif selon au moins l'une des revendications 3 à 12,
**comprenant les étapes suivantes :**
aa) l'établissement de la connexion fluidique d'un premier de la pluralité de tuyaux (4) à un premier des canaux (11) du support de tuyau (10) avec le premier bain de fluide chimique (100), et donc la fourniture du premier fluide chimique à travers le premier tuyau (4) dans le premier canal (11),
et le positionnement de la fenêtre de trajet de faisceau (12) du premier canal (11) avec le support de tuyau (10) dans le trajet de faisceau,
bb) la mise en marche du spectromètre de fluorescence X (3) et la génération du trajet du faisceau à partir du faisceau d'entrée (S1) et du faisceau de sortie (S2) de rayons X émis, irradiant ainsi le fluide chimique,
cc) l'analyse du premier fluide chimique par détection des rayons X émis,
dd) après l'analyse du premier fluide chimique, la mise à disposition et l'activation de la connexion fluidique d'un autre de la pluralité de tuyaux (4) qui est connecté de façon fluidique à un autre des bains de fluide chimique (100), et donc la mise à disposition d'un deuxième fluide chimique dans l'autre tuyau (4),
ee) après l'analyse du premier fluide chimique, le déplacement du support de tuyau (10) dans le plan du tuyau (E) et le positionnement de la fenêtre de trajet de faisceau (12) de l'autre canal (11) dans le trajet de faisceau,
ff) l'analyse de l'autre fluide chimique par détection des rayons X émis.

16. Procédé selon la revendication 15,
**comprenant l'étape suivante :**
gg) répéter les étapes aa) à ff) ou les étapes dd) à ff) et analyser une ou plusieurs fois les fluides chimiques dans tous les tuyaux (4) de la pluralité de tuyaux (4).

17. Procédé selon la revendication 15 ou 16,
**comprenant les étapes suivantes :**
hh) répéter les étapes cc) et ff) après une durée prédéterminée.
